Europäisches Patentamt

European Patent Office

Office européen des brevets

(19)

(11) Publication number: **0 139 367**
**A1**

## (12) EUROPEAN PATENT APPLICATION

(21) Application number: **84305394.3**

(22) Date of filing: **08.08.84**

(51) Int. Cl.⁴: **B 65 G 45/00**

(30) Priority: **12.10.83 JP 191288/83**
**16.02.84 JP 28299/84**

(43) Date of publication of application:
**02.05.85 Bulletin 85/18**

(84) Designated Contracting States:
**CH DE GB IT LI**

(71) Applicant: **SATAKE ENGINEERING CO., LTD.**
**19-10, Ueno 1-chome**
**Taito-ku Tokyo 110(JP)**

(72) Inventor: **Satake, Toshihiko**
**2-38, Saijonishihonmachi**
**Higashihiroshima-shi Hiroshima-ken(JP)**

(74) Representative: **Votier, Sidney David et al,**
**CARPMAELS & RANSFORD 43, Bloomsbury Square**
**London WC1A 2RA(GB)**

(54) Cleaning device for bucket elevator.

(57) The invention relates to a cleaning device for a bucket elevator for removing any contamination or dust attached on the inner wall of a casing and any grains remaining at the bottom portion of the casing of the elevator. The device includes a swing member (105) carrying a cleaning element (8) such as brushes or a resilient thin plate member, which can swing with respect to an endless belt (5) in such a manner as to be folded-out while the cleaning operation is in progress and be folded-in while the cleaning operation is not in progress so that the cleaning element can travel within the casing without friction with or touching on the inner wall of the casing. The device may include a cleaning element contracting means (102 to 103) which is capable of reducing the width of the cleaning element when it is in its folded-in position.

FIG.2

## Cleaning device for bucket elevator

The present invention relates to an improvement in a cleaning device for a bucket elevator for grains, grain flour and other materials.

The typical bucket elevator has been known as having such construction that an upright casing is provided at its top portion with a shaft carrying a head wheel and at its bottom portion a shaft carrying a foot wheel; an endless belt mounting thereon a number of buckets at spaced intervals is mounted over the head and foot wheels. In the thus arranged bucket elevator, the grains supplied to an inlet port disposed at the lower portion of the casing are scooped up and elevated up to the top portion of the casing by the buckets travelling within the casing, and the thus elevated grains are discharged through a grain discharging port by centrifugal action as the buckets pass over the head wheel.

Conventionally, in the above described bucket elevator, a thin plate member or a brush member which is directly or indirectly fixed on the bucket belt and which is constantly in frictional contact with the inner wall of the casing has been used in order to effect a scraping and cleaning action, while the bucket belt is travelling, to remove any contamination or dust attached on the inner wall of the casing or any grains remaining without being scooped up at the bottom portion of the casing of the elevator. Among the conventional cleaning devices, there are some types in which only the edge opposite from the bucket belt is in frictional contact with the inner wall of the casing leaving the two side edges of the cleaning plate substantially free from being in contact with the inner wall. However, in any case, such continuous and constant cleaning work is not merely unnecessary but is found to have produced damage to the inner wall of the casing and the cleaning device itself. Further, a drawback has also been found in that if the thin plate or brush member for scooping up the remaining grains is inappropriately shaped it often caused some grains to remain undischarged from the bottom of the casing.

Accordingly, an object of the present invention is to overcome the above-described problems of the prior art.

To this end, the present invention provides a cleaning device for a bucket elevator which includes a swing member carrying a cleaning element such as brushes or a resilient thin plate member, which swings with respect to the endless belt and is capable of being folded-in while the cleaning operation is not in progress and folded-out while the cleaning operation is in progress and, if necessary, a cleaning element contracting means which is capable of reducing the width of the cleaning element when it is in its folded-in position, whereby the cleaning element can travel within the casing without friction with or touching on the inner wall of the casing.

Therefore, in the bucket elevator having the cleaning device of the invention, it is possible to effect the cleaning operation only when optionally necessary in the course of a long operation thereby preventing the inside surface of the casing as well as the cleaning device itself from being damaged and also completely avoiding extraneous matter adhering onto the inner wall of the casing and grains remaining at the bottom of the casing.

The foregoing objects and advantages of the invention will become more apparent from the following description of the preferred embodiments of the invention in conjunction with the accompanying drawings as applied to a bucket elevator for grains.

Fig. 1 is an elevational view of a bucket elevator, partly broken away, embodying the cleaning device of the invention;

Fig. 2 is a view illustrating a first embodiment of a cleaning device of the invention;

Fig. 3 is a cross-sectional view of a control means therefor;

Fig. 4 is an enlarged view of a cleaning element contracting means;

Fig. 5 is a schematic view illustrating the folding operation of the above device;

Figs. 6 and 7 are views respectively illustrating the folded-out and folded-in positions of a second embodiment of a cleaning device of the invention;

Fig. 8 is a view illustrating a third embodiment of a cleaning device of the invention;

Fig. 9 is a view illustrating a fourth embodiment of a cleaning device of the invention;

Fig. 10 is a schematic view illustrating the cleaning operation of the above device;

Fig. 11 is a view illustrating the folded-in position of the device shown in Fig. 9;

Fig. 12 is a view illustrating a modification of the device shown in Fig. 9;

Fig. 13 is a view illustrating the bending guide plate; and

Fig. 14 is a view illustrating an example of the control means which can be employed in any of the above second to fourth embodiments.

Throughout the following description, similar reference characters refer to similar elements in all figures of the drawings.

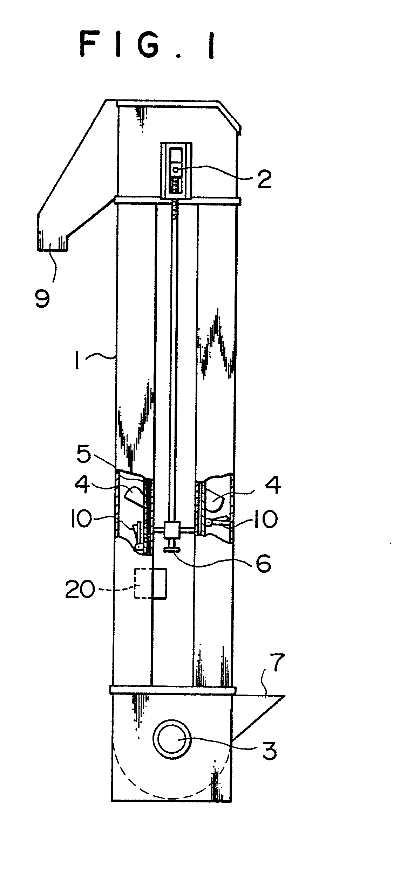

Referring first to Fig. 1, a bucket elevator embodying the present invention has an upright casing 1 at an upper portion of which is provided with a shaft 2 carrying a head wheel and at a lower portion of which is provided with a shaft 3 carrying a foot wheel. An endless bucket belt 5 carrying thereon a number of buckets 4... at spaced intervals runs around the head and foot wheels and thus provides, in combination with other parts, an elevator of a bucket belt type. The numeral 6 represents a head shaft takeup means of the screw type arranged for the purpose of compensating the variations in length of the bucket belt 5 due to temperature changes, atmospheric conditions, or wear. The numeral 7 represents a grain inlet port which is disposed at the lower portion of the casing 1. The numeral 9 represents a grain discharging port through which the grains elevated by the travelling buckets are discharged out of the casing. The numerals 10 and 20 represent the cleaning device of the present invention, which will be fully explained hereunder.

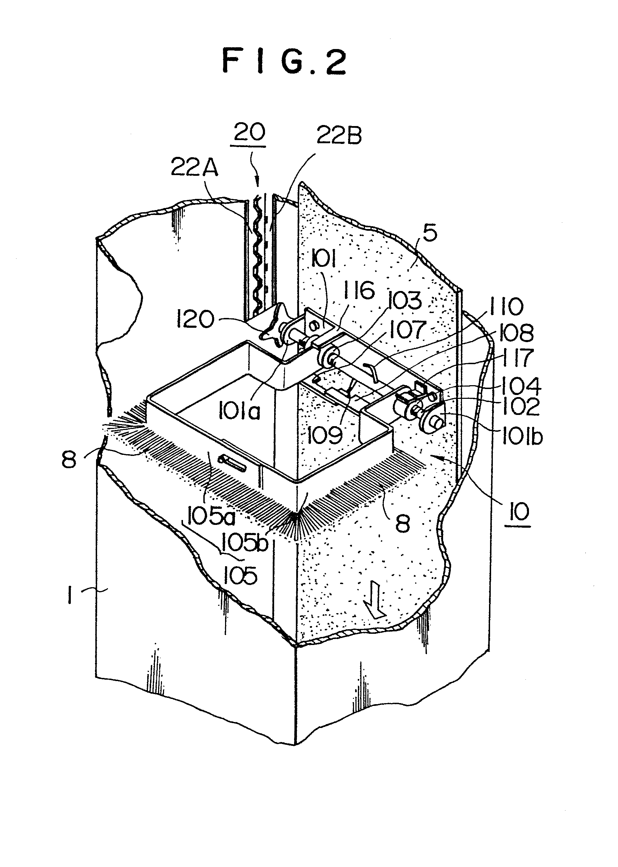

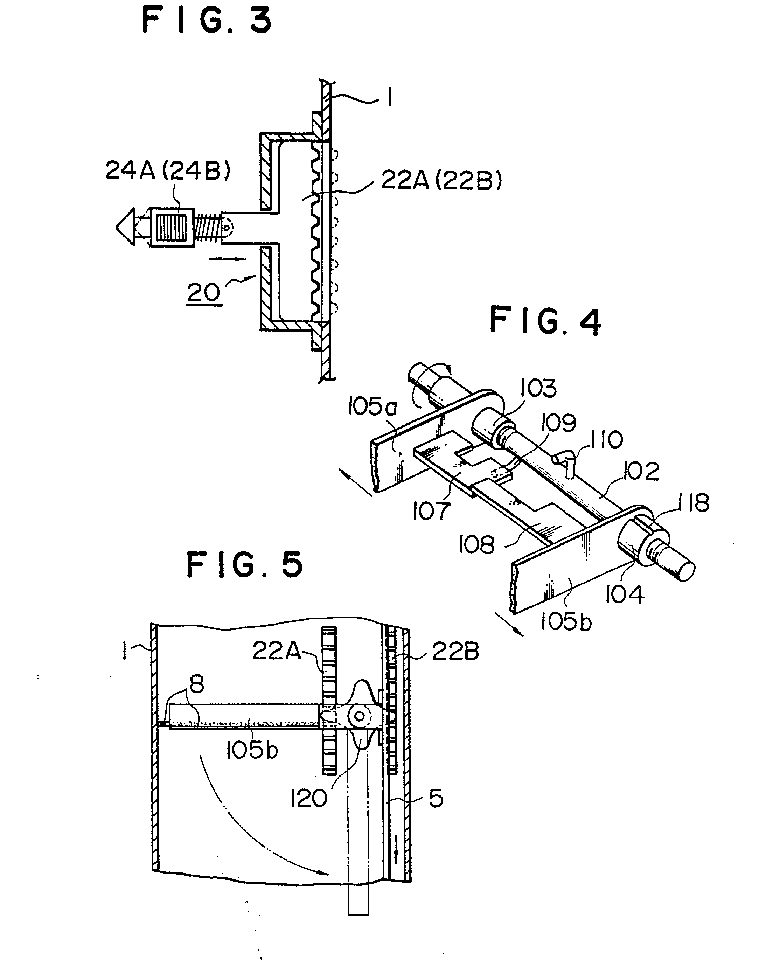

Referring now to Figs. 2 to 5, there is shown a first embodiment of the cleaning device according to the invention which comprises a cleaning element 8 which may be made of brushes or a resilient plate member such as a rubber plate; a swing member 105 in the form of divided swing frames 105a and 105b, which swings together with the cleaning element 8 from its folded-in position to the folded-out position and vice versa with respect to the endless bucket belt 5; and a control means 20 including a pair of racks 22A and 22B, which is provided on the wall of the casing 1 in such a way that the racks 22A and 22B can alternately protrude and retreat from the inner surface of the same casing. The swing frames 105a and 105b are swingably supported by a fixing member including a base plate 101 secured on the surface of the bucket belt 5 and having a rotatable bar 102 carried between the two side wall portions 101a and 101b thereof. A pair of nut members 103 and 104, to which the swing frames 105a and 105b are fixed respectively, are movable on the rotatable bar 102. The respective threaded portions on the bar 102 where the respective nuts 103 and 104 are mounted are oppositely oriented so that the rotation of the bar 102 in one direction causes the nut members 103 and 104 together with the respective swing frames 105a and 105b to move away from each other and in the other direction causes the same nuts to move closer to each other, whereby the width of the swing member 105 together with the cleaning element 8 is expanded when the swing member 105 is in its folded-out position and is contracted to reduce the width of the swing member 105 when it is in its folded-in position. The swing frames 105a and 105b carry respectively at their leg portions hook engaging plates 107 and 108 to be hooked for being folded-out and folded-in. On the intermediate non-threaded portion of the rotatable bar 102, there are provided hooking arms 109 and 110 in such a way that, as the bar 102 rotates, either of these hooking arms 109 and 110, as the case may be, will abut either of the above hook engaging plates 107 and 108 to fold-out or fold-in the swing frames 105a and 105b together with the cleaning element 8. A pinion 120 is fixed at one end portion of the bar 102. When the swing member 105 together with the cleaning element 8 swings to its folded-out position, the swing member 105 stops at this position due to stopping means such as a ridge and groove engagement means 117, 118 and a stopper plate 116 provided on the base plate 101. As shown in Fig. 3, the wall of the casing 1 carries the control means 20 including the racks 22A, 22B for engagement with the pinion 120 for the folding-out and folding-in action of the swing member 105. Solenoids 24A and 24B are respectively connected to the racks 22A and 22B.

Thus, when the inner wall of the casing 1 is to be cleaned and the remaining grains at the bottom portion of the same casing are to be swept out, the solenoid 24A for the folding-out action provided in the control means 20 is actuated to cause the associated rack 22A to protrude from the inner surface of the wall so that the pinion 120 fixed to the end of the bar 102 engages with the rack 22A thereby effecting the rotation of the pinion 120 and hence the rotation of the bar 102. As best shown in Fig. 4, when the nuts 103 and 104 move respectively outwards, the swing frames 105a and 105b assume a predetermined expanded position and the hooking arm 109 hooks and presses up the hook engaging plate 107 together with the hook engaging plate 108 so as to fold-out the swing frames 105a and 105b. The cleaning element 8 in the folded-out position and the buckets 4... travel within the casing 1 and, thus, any extraneous matter adhering to the inner wall or any grains remaining at the bottom are removed and discharged from the bucket elevator.

Next, the folding-in action of the cleaning element 8 is effected in such a manner that, when the solenoid 24B provided in the control means 20 is actuated to cause the associated rack 22B to protrude from the inner surface of the wall, the pinion 120 engages with the rack 22B thereby effecting the reverse rotation of the pinion 120 and hence the reverse rotation of the bar 102. This reverse rotation causes the swing frames 105a and 105b to assume a contracted position and the hooking arm 110 to hook and press down the hook engaging plate 108 together with the hook engaging plate 107 so as to fold-in the swing frames 105a and 105b. While the cleaning operation is taking place, both the racks 22A and 22B in the control means 20 are in a position in which these racks are retreated from the inner wall surface of the casing.

In Fig. 5, the folded-out position of the cleaning element 8 with respect to the endless bucket belt 5 is shown by the full line and the folded-in position with respect to the same belt by the two-dots-and-dash line.

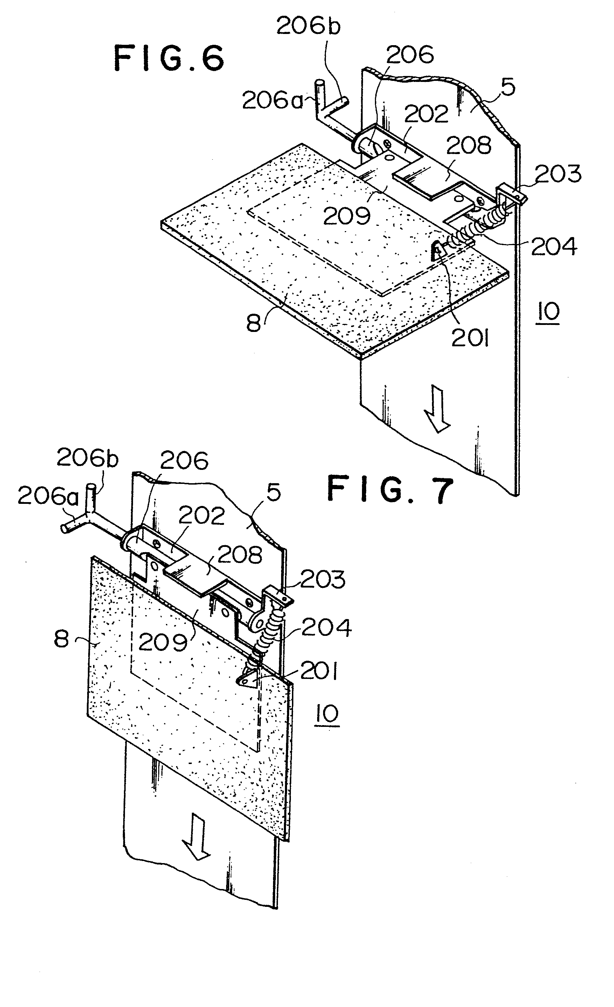

Figs. 6 and 7 show a second embodiment of the present invention in which the cleaning device is so arranged that an anchoring means 201 is provided near one side-edge portion of a swing plate 209 and a spring 204 is provided between the anchoring means 201 and a stationary arm 203 extending from the fixing member, that is, a base plate 202, and there are provided levers such as folding-out lever 206a and folding-in lever 206b at one end of the bar 206. The tension of the spring 204 causes the swing member, that is, the swing plate 209 to flip-out and flip-in when either of the above folding levers 206a and 206b is actuated.

In this second embodiment, the cleaning plate 8 may easily be folded-out and folded-in by the manual actuation of the folding-out and -in levers 206a, 206b, but it is to be noted that, as explained later, the control means 20 may be provided on the wall of the casing so as to effect the folding-out and folding-in action of the cleaning plate 8 while the bucket belt is travelling within the casing. Further, the folded-out angular position of the cleaning plate 8 during the cleaning operation is maintained by the tension of the spring 204 and the abutment of the upper surface of the swing plate 209 to the underside surface of a stopper plate 208 which horizontally extends from the base plate 202.

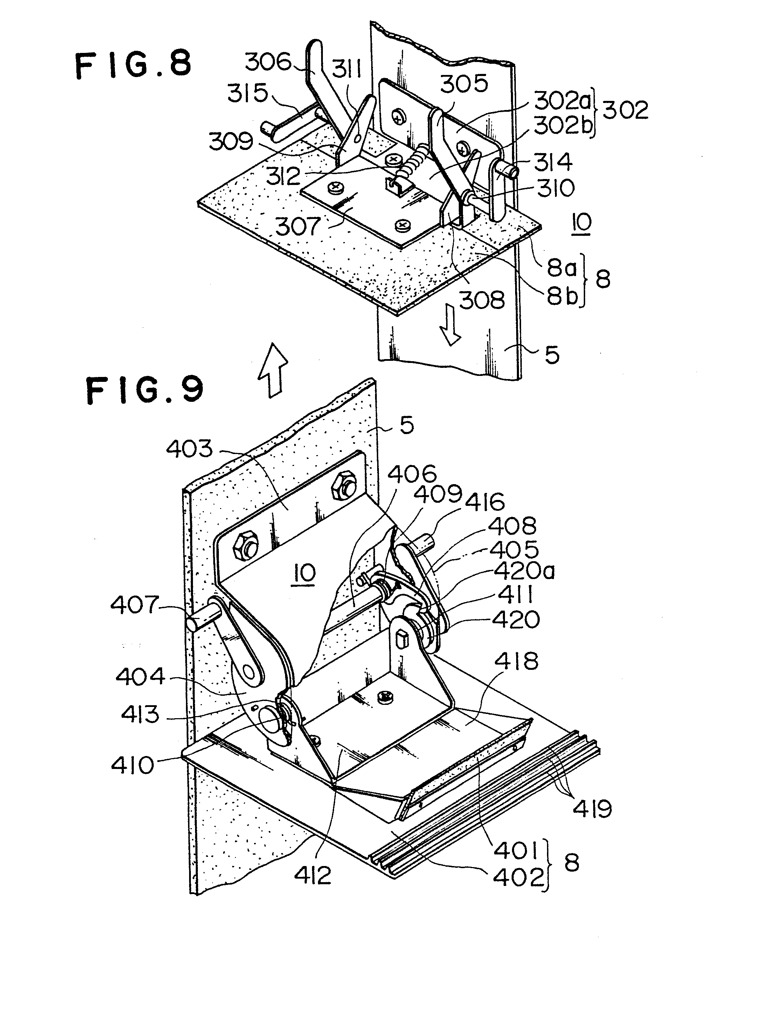

Turning now to Fig. 8, there is shown a third embodiment of the present invention which is illustrated in the form of the folded-out position. On the bucket belt 5 there is secured by such means as bolts and nuts a fixing member, that is, a bent base plate 302 consisting of a first base plate portion 302a and a second base plate portion 302b for mounting on its underside surface a first cleaning element 8a. The second base plate portion 302b is provided at its side edges with a pair of arms 305 and 306 standing opposite to each other thereat. A swing plate 307 mounting on its underside surface a second cleaning element 8b and having a pair of arms 308 and 309 at its side edges is swingably carried by the bent base plate 302 in such a manner that their arms 308 and 309 are pivoted at respective pivots 310 and 311 of the arms 305 and 306 standing from the side edges of the second base plate portion 302b. The first base plate portion 302a and the swing plate 307 have a spring member 312 therebetween so that the swing plate 307 can swing back and forth from its horizontal position to a vertical position with respect to the second base plate portion 302b. A folding-out handle 314 is fixed to the arm 308 for effecting the folding-out action of the swing plate 307 and a folding-in handle 315 is fixed to the arm 309 for effecting the folding-in action of the same plate 307. Due to the appropriate tension of the spring 312, the flip-out and flip-in action of the swing plate 307 can surely and easily be effected. Also, when the swing plate 307 moves upwardly to assume its vertical position, that is, the folded-in position, both the side edge portions of the first and second cleaning elements 8a and 8b are pressed away by the respective end portions of the arms 308, 309 and 305, 306, and, thus, are prevented from being in contact with the inner wall of the casing. Therefore, any damage or wear which may otherwise be caused by the frictional contact of the cleaning elements 8a and 8b can be effectively avoided.

In this third embodiment, the cleaning element 8(8b) can easily be folded-out and folded-in by the manual actuation of the folding-out and folding-in handles 314 and 315, but it is to be noted that, as explained later, the control means 20 may be provided on the wall of the casing so as to effect the fold-out and fold-in action of the above cleaning element 8(8b) while the bucket belt is travelling within the casing.

Next, the fourth embodiment of the present invention will be explained hereunder with reference to Figs. 9 to 13.

A fixing member 403 is secured on the endless bucket belt 5 by means of bolts and nuts. Between the two side wall portions 404 and 405 of the fixing member 403, there extends a rotatable bar 406 on which is provided a stop claw hook 408. The stop claw hook 408 is always forced clockwise by a spring 409. A folding-in handle 407 is fixed to one end portion of the rotatable bar 406. The lower parts of the above two wall portions 404 and 405 carry respectively shafts 410 and 411 on which a swing body 412 is mounted. A spring 413 is provided at the supporting shaft 410 so as to force always the swing body 412 clockwise and a folding-out handle 416 is fixed to the outer end portion of the supporting shaft 411. A snail cam plate 420 having an engaging groove 420a thereon is mounted on the supporting shaft 411. A cleaning element 8 of the cleaning device of this fourth embodiment comprises a grain scooping plate 401 for scraping and scooping up the grains remaining at the bottom of the casing 1 and a cleaning plate 402 made of such a resilient plate member as a rubber plate for sweeping out the dust or extraneous matter adhering onto the inner wall of the casing and remaining at the bottom of the casing. A connecting body 418, at the front edge of which is secured the grain scooping plate 401, and the cleaning plate 402 are both screw-fixed onto the underside surface of the swing body 412. The cleaning plate 402 has at its front edge portion a plurality of ribs 419 for removing or sweeping off the bran or dust firmly attached on the inside wall surface of the casing.

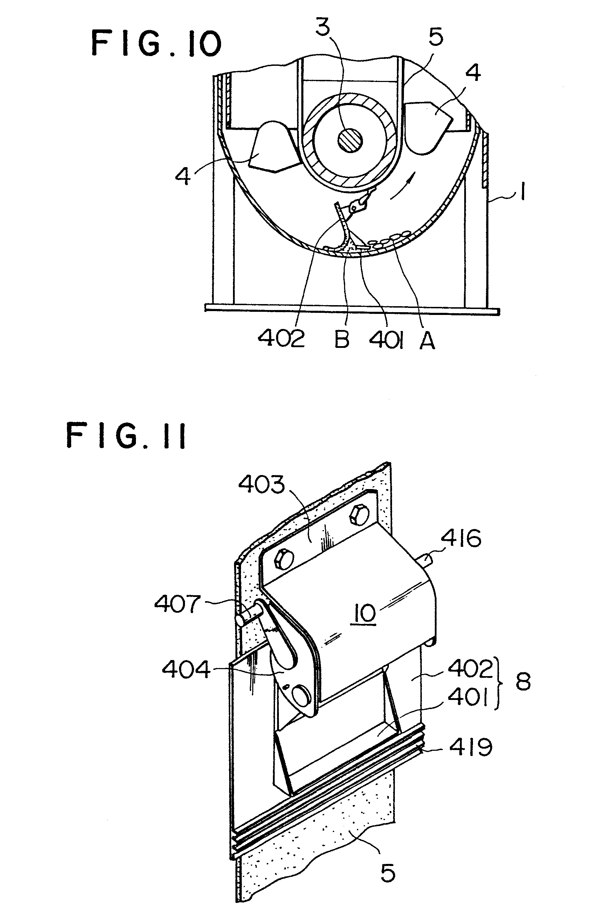

In the thus arranged cleaning device of this fourth embodiment, when the inside of the casing is to be cleaned, the folding-out handle 416 is actuated to rotate the snail cam plate 420 to an appropriate extent, that is, until the stop claw hook 408 on the rotatable bar 406 engages with the engaging groove 420a of the snail cam plate 420, so that the swing body 412 is folded-out together with the grain scooping plate 401 and the cleaning plate 402. As best seen in Fig. 10, while the cleaning element 8 (401, 402) in the folded-out position and the buckets 4... on the endless bucket belt 5 travel in the casing 1, the grain scooping plate 401 operates to scoop up any grains A having not been taken up by the buckets 4... and remaining at the bottom of the casing 1 and the cleaning plate 402 operates to sweep out any dust or extraneous matter B remaining there.

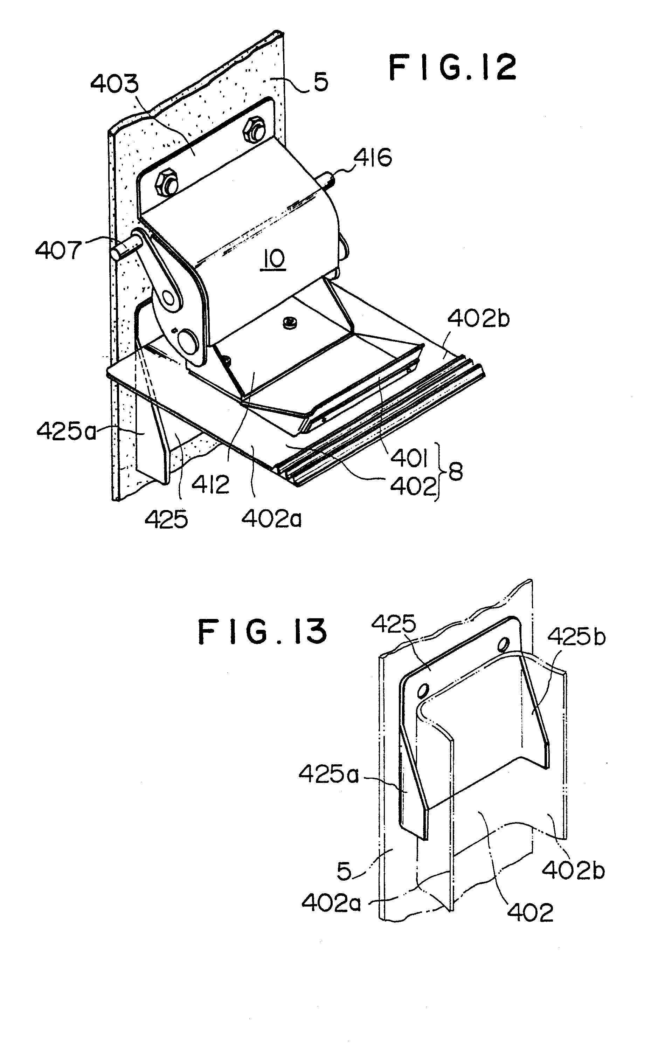

When the cleaning operation of the inside of the casing 1 is completed and the cleaning element 8 (401, 401) is to be in the folded-in position, the folding-in handle 407 is slightly moved in a counterclockwise direction so as to release the engagement of the stop claw hook 408 with the engaging groove 420a of the snail cam plate 420. Then, the swing body 412 is forced to move angularly clockwise due to the spring force of the spring 413 so that the grain scooping plate 401 and the cleaning plate 402 assume the folded-in position as shown in Fig. 11.

The cleaning device shown in Fig. 12 is a modification of that shown in Fig. 9, which is further provided with a bending guide plate 425 provided underneath the fixing member 403. This bending guide plate 425 causes the side edges 402a and 402b of the cleaning plate 402 to be bent when this plate 402 is in the folded-in position. The side edges 402a and 402b of the cleaning plate 402 are respectively pressed and bent by the side wall portions 425a and 425b of the bending guide plate 425 in the manner as shown in Fig. 13. Accordingly, the span between the two side edges of the cleaning plate 402 is reduced so as to be able to avoid any damage or wear which would otherwise occur due to friction between the cleaning plate 402 and the inside wall surface of the casing 1. This will also facilitate smooth travelling of the endless belt 5 because of the reduction of load and also avoid wearing of the cleaning plate 402 and other parts associated thereto.

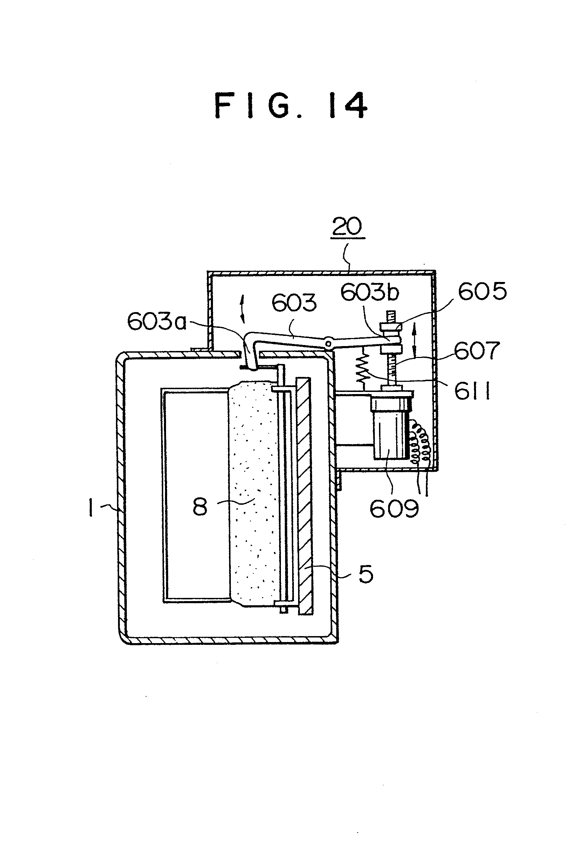

Each of the cleaning elements 8 explained so far with respect to the second to fourth embodiments is such that it is possible for the cleaning element 8 to be easily folded-out and folded-in by the manual operation of the folding-out and folding-in levers or handles after the movement of the bucket belt is temporary stopped. However, it is possible to effect the folding-out and folding-in action of the cleaning element 8 in each of these embodiments without stopping the movement of the bucket belt 5 by having the control means 20 installed on the wall of the casing, which actuates the folding-out and folding-in levers or handles as shown in Fig. 14.

Fig. 14 shows an example of the control means 20 installed on the wall of the casing 1, which can be employed in any of the second to fourth embodiments explained above. As shown herein, the cleaning element 8 is caused to be folded-out or folded-in as a hook portion 603a of a lever arm 603 pivotally provided on the casing 1 moves in or out and thus engages with the folding-out or folding-in lever 206a, 206b in the second embodiment, the folding-out or folding-in handle 314, 315 in the third embodiment, or the folding-out or folding-in handle 416, 407 in the fourth embodiment, as the case may be. An end portion 603b of the lever arm 603 is connected to a movable nut 605 engaging with a threaded shaft 607 connected to a shaft of a reversible electric motor 609. The numeral 611 represents a spring. The control means 20 may perform its function, as required, by way of remote control means.

It is to be noted that the control means 20 shown in Fig. 14 is intended only to illustrate an example of arrangements, especially as to how the hook portion 603a of the lever 603 in the control means 20 engages with the levers or handles in the casing 1. In the actual practising of the invention, the arrangements must suit the given types of levers or handles extending from the swing member and it will be a matter of design as to how the control means 20, especially the hook portion 603a, should be designed. It can be explained that, with the third and fourth embodiments as examples, the same arrangements as given in Fig. 14, at least those for th hook portion, may be provided at the symmetrically opposite side of the casing so that the hook portion on one side engages with the folding-out handle and the other hook portion on the other side engages with the folding-in handle.

As explained hereinabove, by making the cleaning element capable of being selectively in the folded-in and folded-out positions with respect to the bucket belt and also capable of reducing the width of the cleaning element so that it can travel within the casing without friction with or touching on the inner wall of the casing when it is

0139367

in its folded-in position, the present invention made it possible to perform the cleaning operation only when optionally necessary, thereby preventing the inside surface of the casing as well as the cleaning device, especially the cleaning element, from being damaged or worn and also facilitating smooth travel of the bucket belt.

While the invention has been described in its preferred embodiments, it is to be distinctly understood that the invention is not limited thereto but may be otherwise variously embodied within the scope of the following claims.

Claims:

1.      A cleaning device for a bucket elevator of the type in which an endless belt (5) carrying a number of buckets (4) is arranged to travel within an upright casing (1) thereof comprising a cleaning element (8) for cleaning the inside wall of said upright casing, characterized in that said cleaning device comprises:

a swing member (105; 209; 307; 412) carrying said cleaning element and capable of being folded-in and folded-out with respect to said endless belt;

a fixing member (101; 202; 302; 403) secured on said endless belt and swingably carrying said swing member;

a stopping means (116, 118; 204, 208; 312; 408, 420) provided with said fixing member for stopping and maintaining said swing member at its folded-out position; and

a fold-in and -out operating means (120; 206a, 206b; 314, 315; 407, 416) associated with said swing member, whereby, while the cleaning operation is in progress, said cleaning element is in a folded-out position and, while the cleaning operation is not in progress, said cleaning element is in a folded-in position so that said cleaning element can travel in the casing without touching on the inner wall thereof.

2.      A cleaning device for a bucket elevator according to Claim 1, wherein said device further comprises a control means (20) which is provided on the wall of said upright casing and capable of effecting the folding-out and folding-in action of said swing member.

3.      A cleaning device for a bucket elevator according to Claim 1, wherein said device further comprises a cleaning element contracting means (102, 103, 104; 305, 306, 308, 309; 425) associated with said cleaning element for reducing the width of said cleaning element at its folded-in position.

4.        A cleaning device for a bucket elevator according to Claim 1, wherein said cleaning element is made of a brush member.

5.        A cleaning device for a bucket elevator according to Claim 1, wherein said cleaning element is made of a resilient plate member.

6.        A cleaning device for a bucket elevator according to Claim 1, wherein said cleaning element includes a plate member (401) for scraping.

7.        A cleaning device for a bucket elevator according to Claim 1, wherein said swing member comprises frame members (105).

8.        A cleaning device for a bucket elevator according to Claim 1, wherein said swing member comprises a plate member.

9.        A cleaning device for a bucket elevator according to Claim 3, wherein said cleaning element contracting means includes a threaded rotatable bar (102) and nut members (103, 104).

10.        A cleaning device for a bucket elevator according to Claim 3, wherein said cleaning element contracting means comprises a bending guide plate member (425).

11.        A cleaning device for a bucket elevator according to Claim 1, wherein said fold-in and -out operating means includes levers (206a, 206b) or handles (314, 315; 406, 416).

12.        A cleaning device for a bucket elevator according to Claim 2, wherein said fold-in and -out operating means includes a pinion (120).

13.    A cleaning device for a bucket elevator according to Claim 2, said control means includes a pair of racks (22A, 22B), one for effecting the folding-out action and the other for effecting the folding-in action.

14.    A cleaning device for a bucket elevator according to Claim 2, wherein said control means includes a lever arm (603) for effecting the folding-out action and a lever arm (603) for effecting the folding-in action.

# F I G . I

# FIG. 2

# FIG. 3

24A (24B)

22A (22B)

20

1

# FIG. 4

105a

103

109

110

102

118

107

108

104

105b

# FIG. 5

1

22A

22B

8

105b

120

5

F I G . 6

206b

206a

206

202

208

206

203

209

208

204

8

201

10

206b 206

206a

206

202

5

208

203

F I G . 7

8

204

209

201

10

FIG. 8

306 311 305 302a 302
315 302b
309 314
312 310
307 10
8a 8
8b
308 5

FIG. 9

5
403
406 409 416
408
405
420a
10 411
420
407 418
404
413
410 419
412 401 8
402

FIG.10

402    B   401   A

FIG.II

**FIG.12**

**FIG.13**

# F I G. 14

| Category | Citation of document with indication, where appropriate, of relevant passages | Relevant to claim | CLASSIFICATION OF THE APPLICATION (Int. Cl.4) |
|---|---|---|---|
| A | <u>AT - B - 62 830</u> (DAHNERT)<br>* Fig. 3 * | 1,4 | B 65 G 45/00 |
| A | <u>DE - C - 382 667</u> (TAKACS)<br>* Fig. 1,4 * | 1,4 | |
| A | <u>US - A - 1 942 590</u> (BINGER)<br>* Fig. 3 * | 1,4 | |

**DOCUMENTS CONSIDERED TO BE RELEVANT**

TECHNICAL FIELDS
SEARCHED (Int. Cl.4)

B 65 G

The present search report has been drawn up for all claims

| Place of search | Date of completion of the search | Examiner |
|---|---|---|
| VIENNA | 21-12-1984 | BAUMGARTNER |